# EUROPEAN PATENT SPECIFICATION

(11) **EP 3 097 328 B1**
(45) Date of publication and mention of the grant of the patent: **27.02.2019**
(21) Application number: 15702832.5
(22) Date of filing: 21.01.2015
(51) Int. Cl.: F16J 15/02, A47K 3/00, E04B 1/68, F16J 15/06

(54) **SEAM DEVICE**
NAHTVORRICHTUNG
DISPOSITIF DE COUTURE

(30) Priority: 21.01.2014 GB 201400959
(43) Date of publication of application: 30.11.2016
(73) Proprietor: Yu Seal Limited, Long Buckby,Northamptonshire NN6 7RF (GB)
(72) Inventor: MANNING, Keith, Long Buckby Northamptonshire NN6 7RF (GB)
(74) Representative: HGF Limited
(86) International application number: PCT/GB2015/050137
(87) International publication number: WO 2015/110811

(56) References cited:
- DE-U1- 8 711 126
- US-A- 4 760 681
- US-A- 4 829 730
- US-B1- 6 219 982

## Description

This invention relates to a seam device and more specifically, but not exclusively, this invention relates to a seam device for providing a seam, dam or seal between surfaces for inhibiting ingress of materials, such as fluid and/or solid waste therebetween.

Work surfaces in kitchens and bathrooms or water closets are often covered by a hard wipeable protective coating such as a laminated coating of melamine resin. This type of coating is often applied to a low cost material, such as medium density fiber-board (MDF) or chipboard. However, the coating is usually applied only to the areas of the chipboard that are visible in use in order to save cost and to enable fixing of support and attachment members to the uncovered areas of the work surface.

Waste materials are sometimes directed accidentally toward unprotected regions of such work surfaces, for example where spillages occur and fluids seep between the work surface and a surface against which, or adjacent to which, it is mounted. This surface is often fitted with tiles, splashbacks and/or upstands, either for decorative or functional reasons. The part of a work surface normally abutting a wall is generally uncoated, and so water may come into contact with the underlying material, i.e. chipboard or MDF. This material is liable to expand on contact with water, thus causing irreversible damage to the work surface as the coating, liable to stretch, bubble and crack.

It is common practice when fitting such work surfaces to seal the joint between the work surface and the wall, tiles, splashback or upstand with a bead of silicone caulking. However, this process requires a great deal of care and skill in order to produce a seam that blends consistently the adjacent surfaces. Over time, the materials can expand, contract, bow or bend, which may also cause the silicone bead to stretch and/or split.

Another solution is proposed by WO9609783, which discloses an upstand mounting assembly including an elongate upstand member and an elongate mounting member having a pair of orthogonal mounting flanges for attachment to a wall and a workshelf respectively along their junction. Each flange includes a longitudinal lip to receive and retain the upstand member, wherein the lip on the horizontal flange acts as a dam for inhibiting ingress of fluid. US4829730 discloses a decorative moulding for covering a joint between a countertop surface and an adjacent wall surface.

Silicone caulking is also used to seal other joints, for example between the edges of uPVC windows, between bath tubs and adjacent tiled walls or between urinals and the walls to which they are mounted, which may also include tiles and/or splashbacks fitted thereto. It will be appreciated by those skilled in the art that the arrangement of WO9609783 is not suitable for such applications.

There is therefore a need for an alternative arrangement for providing a seam, dam or seal between surfaces for inhibiting ingress of fluids and/or solid waste.

According to an aspect of the invention, there is provided an elongate seaming device for sealing a join between two surfaces, the device comprising a flexible, elongate bead, a pair of deformable longitudinal lips integral with and formed of the same elastomeric material as the bead and an attachment means for attaching the seaming device along a join between two adjacent surfaces, the bead comprising a first mounting surface and a second mounting surface extending perpendicular to the first mounting surface thereby creating a substantially triangular form, the mounting surfaces being configured to extend, in use, along and parallel to a respective one of the two adjacent surfaces of the join such that a further side of the triangular form is visible, wherein the visible side of the triangular form comprises a concave centre and convex portions on either side of the concave centre leading to the lips, the attachment means comprising an adhesive layer or strip extending along the first mounting surface and each lip comprises a flipper extending from one of the outer edges of the visible side at an angle relative to an adjacent one of the mounting surfaces and is configured to deform, as the device is attached along the join, against a respective surface on each side of the join along which the device is attached to provide a substantially continuous seal.

The or each lip may comprise a wedge shape that tapers to provide a sharp edge in contact with the respective surface. The second mounting surface may be free of attachment means such that the seal is maintained whilst permitting relative movement between the adjacent surfaces of the join. The adhesive layer or strip may be covered by a release liner which is removable, in use, prior to attachment to one of the surfaces of the join. The elastomeric material may comprise a flexible polyvinylchloride or a silicone or natural rubber material. Another aspect of the invention provides bath tub or shower comprising an elongate seaming device as described above attached thereto. Another aspect of the invention provides an item of sanitary ware, such as a urinal or toilet, comprising an elongate seaming device as described above.

Another aspect of the invention provides a method of preparing a seal along a join between two adjacent surfaces, the method comprising attaching a seaming device as described above along a join between two adjacent surfaces such that each deformable longitudinal lip deforms against a surface adjacent the join along which the device is attached to provide a substantially continuous seal.

The method may comprise removing a release liner from the adhesive strip after attaching the adhesive strip to the seaming device and prior to attaching the seaming device along the join. The method may comprise attaching the seaming device to a sanitary ware item, shower or bath along a join between the sanitary ware item, shower or bath and an adjacent wall.

Thus, the invention provides a seaming device that enables a seam to be provided along a join between two adjacent surfaces through simple attachment. For the avoidance of doubt, the term "join" as used herein means the coming together of the two surfaces, but does not mean that these surfaces are in contact with one another. Indeed, embodiments of the seaming device are intended to maintain a seam between such surfaces that are movable relative to one another, for example the join between a bath tub surface and a wall. Moreover, the term "seam" encompasses an aesthetic seam and a functional seam that could, but need not, function as a dam or seal for preventing or at least inhibiting ingress and/or egress of fluids and the like.

For clarity, the term "mounting surface" will be used hereinafter when referring to the first and second surfaces, but such term may be replaced with "surface" in the claims or elsewhere.

Each lip comprises a flipper. Preferably, each lip is tapered or comprises a tapered lip. Each lip may taper to provide a sharp edge. In some embodiments, the attachment means is comprised in and/or extends along and/or is associated with only one of the first and second mounting surfaces. The adhesive layer or strip may comprise a tape, e.g. a double face tape, or glue or a layer or strip of glue. The adhesive layer or strip may be covered by a release liner, which may be removable, in use, e.g. prior to attachment to one of the surfaces of the join.

Providing an attachment means that is associated with one of the first and second mounting surfaces, and associating one of the longitudinal lip or edge with the other, permits relative movement between the adjacent surfaces of the join whilst maintaining a seam or seal therebetween. In alternative embodiments, the attachment means extends along and/or is associated with both of the first and second mounting surfaces.

The seaming device is configured for providing a seam along a join between two adjacent surfaces that are at an angle with respect to one another. The adjacent surfaces are at an angle approximately orthogonal or substantially 90° with respect to one another. The seam element or member may be configured to deform, in use, against each of the adjacent surfaces to provide a curved, e.g. concave, seam or dam or seal therebetween.

The seaming device is preferably configured to provide, in use, a substantially continuous dam that at least inhibits, more preferably prevents, ingress of fluids and/or solid waste. The seam or dam or seal is preferably provided by virtue of the close contact between the deformed seam element or member and the surfaces.

The seam element or member may further comprise first and second longitudinal edges.

The seam element or member may comprise a flexible polyvinylchloride (PVC) material. Alternatively, the seam element or member may comprise a different resilient or flexible material, for example a silicone or natural rubber material.

The seam device may be specifically adapted for use in providing a seam between sanitary ware, such as a toilet or urinal, and a wall or floor and/or specifically adapted for use in providing a seam between one or more parts of a bath or shower and a wall or floor. A yet further aspect of the invention provide a sanitary ware item, such as a toilet or urinal assembly, comprising the seam device attached thereto and/or a shower or bath assembly incorporating the seam device attached thereto.

A further aspect of the invention provides a method of preparing a seal along a join between two adjacent surfaces as defined in the appended claims. The method may comprise attaching the attachment means, which may comprise an adhesive strip, to the seam device prior to attaching the seam device along the join. The method may further comprise removing a release liner from the attachment means.

For the avoidance of doubt, any of the features described herein apply equally to any aspect of the invention. For example and more specifically, method features or steps that would be apparent to the skilled person from one or more features of the device described above are expressly envisaged and may be incorporated into the claims.

Embodiments of the invention will now be described by way of example only with reference to the accompanying drawings in which:
Figure 1 is a section view of an example of an elongate seaming device for use with an upstand;
Figure 2 is a section view of an example of another elongate seaming device also for use with an upstand;
Figure 3 is a section view of a part seaming device severed from the seaming device of Figure 1;
Figure 4 is a partial section view of an upstand assembly mounted to a work surface and incorporating the seaming devices of Figures 2 and 3;
Figure 5 is a section view of an example of another elongate seaming device;
Figure 6 is a section view of an example of another elongate seaming device;
Figure 7 is a section view of an example of another elongate seaming device;
Figure 8 is a section view of an example of another elongate seaming device;
Figure 9 is a section view of an example of another elongate seaming device;
Figure 10 is a section view of an example of another elongate seaming device;
Figure 11 is a section view of an example of another elongate seaming device;
Figure 12 is a section view of an example of another elongate seaming device;
Figure 13 is a plan view of a window fitted within a window sill and including a seaming device of Figure 10;
Figure 14 is a part section view along line A-A of Figure 13;
Figure 15 is a plan view of a urinal mounted on a wall and including another seaming device;
Figure 16 is a part section view along line B-B of Figure 15;
Figure 17 is a section view of an elongate seaming device according to an embodiment of the invention;
Figure 18 is a part section view of a join between a bath tub and a wall to which the seaming device of Figure 17 has been attached;
Figure 19 is a section view of a non-claimed variation to the seaming device of Figure 17; and
Figure 20 is a section view of another non-claimed variation to the seaming device of Figures 17 and 19.

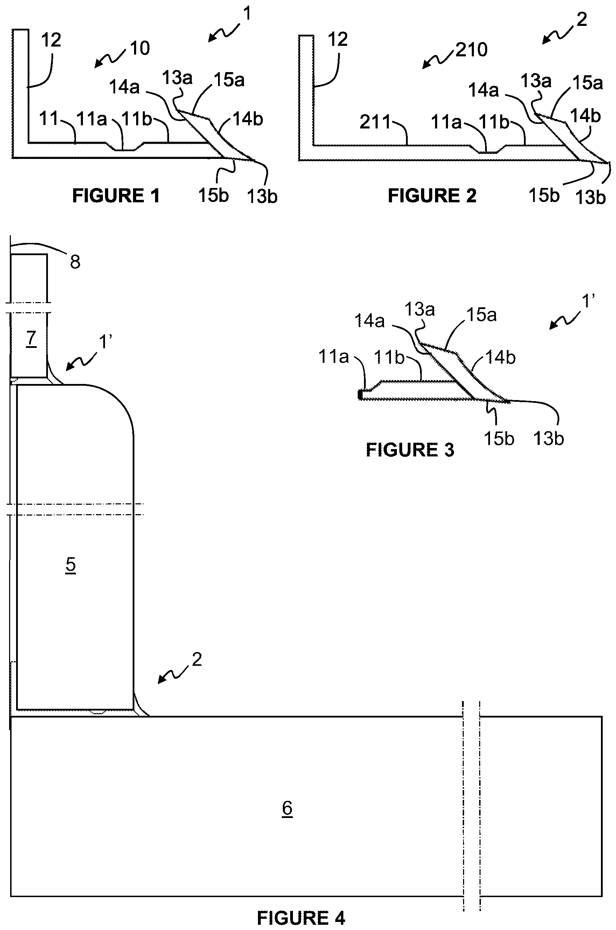

Referring now to Figure 1, there is shown an elongate seaming device 1 according to a first non-claimed embodiment for providing a seam along a join between an upstand 5 and a work surface 6. The seaming device 1 according to this embodiment includes an L-shaped mounting bracket 10 with first and second orthogonal flanges 11, 12 and a dam element 13. The first flange 11 extends horizontally and the dam element 13 extends along and upwardly from its free edge such that a recess is defined between the dam element 13 and the second flange 12 for receiving the upstand 5. In this embodiment, the dam element 13 is formed of a flexible polyvinylchloride (PVC) material and the mounting bracket 10 is formed of a high impact PVC material. The seaming device 1 is formed integrally by an extrusion process.

The first flange 11 includes a thinned or frangible portion 11a between the second flange 12 and the free end or dam element 13. In this embodiment, the thinned or frangible portion 11a is provided by a recess or depression 11a in an upper major surface of the first flange 11. The recess 11a is slightly off-centre, is located on the dam element 13 side of the first flange 11 and it has a thickness of approximately half of the remainder of the first flange 11 and a width that is roughly 15% of the width of the first flange 11.

The recess 11a enables the seaming device 1 to be severed therealong to provide a seam device 1' with a spine 11b but without the bracket 11, 12. This may be beneficial, for example, where it is necessary to provide a seam between the upstand 5 and one or more tiles 7, as shown more clearly in Figure 4.

The dam element 13 in this embodiment includes a first, substantially straight or flat rear side or surface 14a, a second, concavely curved front side or surface 14b, a flat upper lateral side or surface 15a and a flat lower lateral side or surface 15b. The dam element 13 also includes an upper longitudinal edge 13a defined by the intersection between the first surface 14a and the upper lateral surface 15a and a lower longitudinal edge 13b defined by the intersection between the second surface 14b and the lower lateral surface 15b. Each of the intersections forming the longitudinal edges 13a, 13b of the dam element 13 is formed by an acute angle between the surfaces 14a, 15a and 14b, 15b, thereby providing relatively sharp edges 13a, 13b.

The free end of the first flange 11 is connected to the first side 14a of the dam element 13 intermediate its longitudinal edges 13a, 13b, but nearer the lower longitudinal edge 13b. The angle between the first side 14a of the dam element 13 and the first flange 11 is acute, which provides an interference fit between the seam device 1 and the upstand 5.

Referring now to Figure 2, there is shown an elongate seaming device 2 according to a second non-claimed embodiment, similar to the seaming device 1 of Figure 1, wherein like references depict like features which will not be described further. The seaming device 2 according to this design differs from that of Figure 1 in that the first flange 211 of the bracket 210 is wider than the flange element 11 of the seaming device 1 of Figure 1 in order to accommodate a wider upstand member.

In use and as shown in Figure 4, the seaming device 2 is fastened to a work surface 6 in a position in which it abuts an adjacent wall 8 using an adhesive on the underside of the first flange 211 along its length. This operation deforms the lower portion of the dam element 13 between the first flange 11 and the second longitudinal edge 13b against the work surface 6. Similarly, a severed seam device 1' is also fastened to an upper surface of the upstand 5 using an adhesive on the underside of the spine 11b along its length, which also deforms the equivalent portion of its dam element 13 against the upper surface of the upstand 5.

The upstand 5 is then inserted into the recess between the second flange 12 and the dam element 13 and is retained therein by an interference fit. It may also be desirable to include an adhesive (not shown) between the upstand 5 and the wall 8 to fix the upstand in place. The tiles 7 are then affixed to the wall 8 by spreading an adhesive 80 onto the wall and/or the tiles 7 and inserting the tiles 7 into a recess defined between the dam element 13 of the severed seam device 1' and the wall 8.

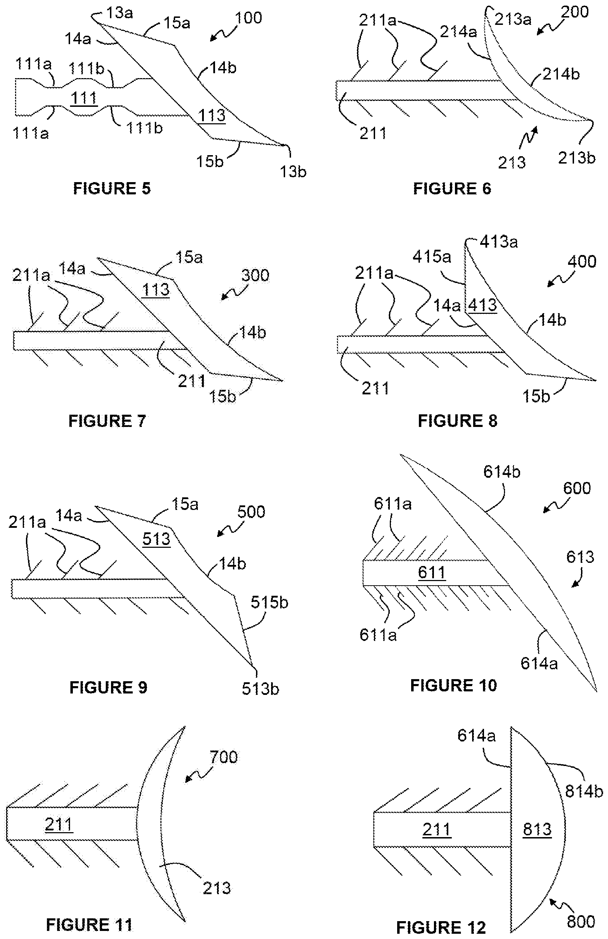

Turning now to Figure 5, there is shown a seam device 100 according to a further non-claimed embodiment. The seam device 100 according to this embodiment includes an elongate flexible seam member 113 and a spine 111 extending along and from a central portion of the seam member 113 at an angle of approximately 45°. The shape of the seam member 113 according to this embodiment is similar to the shape of the dam element 13 of the first design, wherein like references depict like features which will not be described further. The spine 111 according to this design includes two thinned portions defined by two pairs of depressions 111a, 111b on opposite sides of the spine 111.

In Figure 6, there is shown a seam device 200 according to a yet further non-claimed embodiment. The seam device 200 according to this embodiment includes an elongate flexible seam member 213 with a first, convex rear side or surface 214a from which a spine 211 extends along a central portion there. The spine 211 in this embodiment extends at an angle of approximately 45° with respect to a tangential direction of the convex rear side or surface 214a. The spine 211 includes a plurality of projections along its length having spike-shaped cross-sections extending at an angle of approximately 45° relative to the spine 211 and inclined toward the seam member 213 to form a plurality of elongate barbs 211a. The seam member 213 also includes a second, concave front side or surface 214b having a larger radius of curvature than the first surface 214a, wherein the first and second surfaces intersect at the top and bottom of the seam member 213 to define relatively sharp edges 213a, 213b

Figure 7 illustrates a seam device 300 according to a yet further non-claimed embodiment. The seam device 300 according to this embodiment includes a seam member 113 similar to that of the design of Figure 5 in combination with a spine 211 similar to that of the embodiment of Figure 6, wherein like references depict like features which will not be described further.

Figure 8 illustrates a seam device 400 according to another non-claimed embodiment, similar to the seam device 300 of Figure 7, but where the flat upper lateral side or surface 415a of the seam member 413 forms an upper longitudinal edge 413a with the second surface 14b, rather than with the first surface 14a. This seam member 413 provides a more continuous radius along the seam when fitted.

Figure 9 illustrates a seam device 500 according to another non-claimed embodiment, similar to the seam device 300 of Figure 7, but where the flat lower lateral side or surface 515b of the seam member 513 forms a lower longitudinal edge 513b with the first surface 14a, rather than with the second surface 14b. This seam member 513 provides a seam having a pair of shallow ridges when fitted.

Figure 10 shows a preferred seam device 600 according to another non-claimed embodiment. The seam device 600 according to this embodiment includes an elongate flexible seam member 613 with a first, substantially straight or flat rear side or surface 614a from which a spine 611 extends along and from a central portion thereof at an angle of approximately 45°. The seam member 613 also includes a second, convex front side or surface 614b. The spine 611 includes a plurality of projections along its length having spike-shaped cross-sections extending at an angle of approximately 45° relative to the spine 611 and inclined toward the seam member 613 to form a plurality of elongate barbs 611a, 611b of two different lengths. The array of barbs 611a, 611b alternates between long barbs 611a and short barbs 611b, wherein the long barbs 611a are roughly double the length of the short barbs 611b.

Figure 11 illustrates a seam device 700 according to yet another non-claimed embodiment similar to the seam device 200 of Figure 6, but where the spine 211 extends orthogonally with respect to the seam member 213.

Figure 12 illustrates a seam device 800 according to yet another non-claimed embodiment with a spine similar to the spine 211 of the seam device 200 of Figure 6 and an elongate seam member 813 similar to the seam member 613 of the seam device 600 of Figure 10. However, the spine 211 in this embodiment extends orthogonally with respect to the seam member 813 and the radius of the curved second side or surface 814b of the seam member 813 is smaller than the seam member 613 of the seam device 600 of Figure 10 to provide more pronounced bead in use.

The seam device of each of Figures 5 to 12 is formed integrally by an extrusion process using a flexible PVC material.

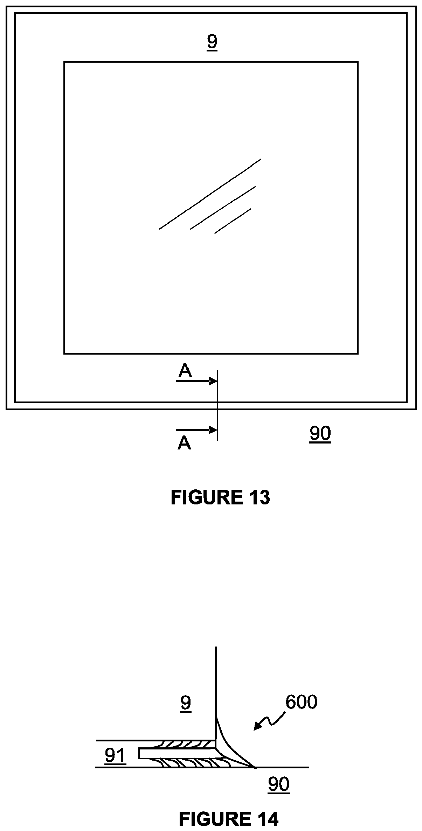

Referring now to Figures 13 and 14, there is shown a uPVC window 9 fitted within a sill 90 with a gap 91 therebetween to allow for expansion of the frame of the window 9. The seam device 600 of Figure 10 has been fitted in the gap 91 to seal the gap 91, while allowing for the expansion and contraction of the frame of the window 9. As is clear from the illustration, the spine 611 of the seam device 600 is inserted into the gap 91 and retained therein by an interference fit between the barbs 611a, 611b and the walls defining the gap 91. Advantageously, the gap 91 may first be filled with filler or silicone caulking prior to the insertion of the spine 611 of the seam device 600.

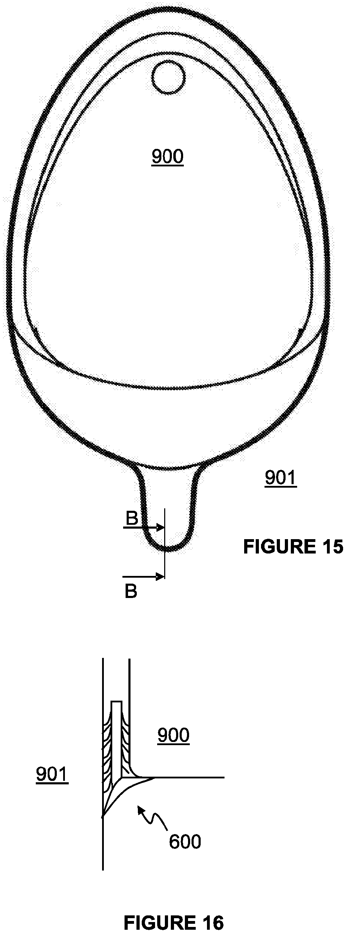

Referring now to Figures 15 and 16, there is shown a urinal 900 fitted against a wall 901 having a gap 991 therebetween. The seam device 600 of Figure 10 has been fitted in the gap 991 to seal the gap 991. As is clear from the illustration, the spine 611 of the seam device 600 is inserted into the gap 991 and retained therein by an interference fit between the barbs 611a, 611b and adjacent portions of the urinal 900 and wall 901. The gap 991 may also be filled with filler or silicone caulking prior to the insertion of the spine 611 of the seam device 600.

Should the seam device 600 become dislodged or damaged in either of these two applications, it can be removed and replaced with ease, as would be appreciated by those skilled in the art.

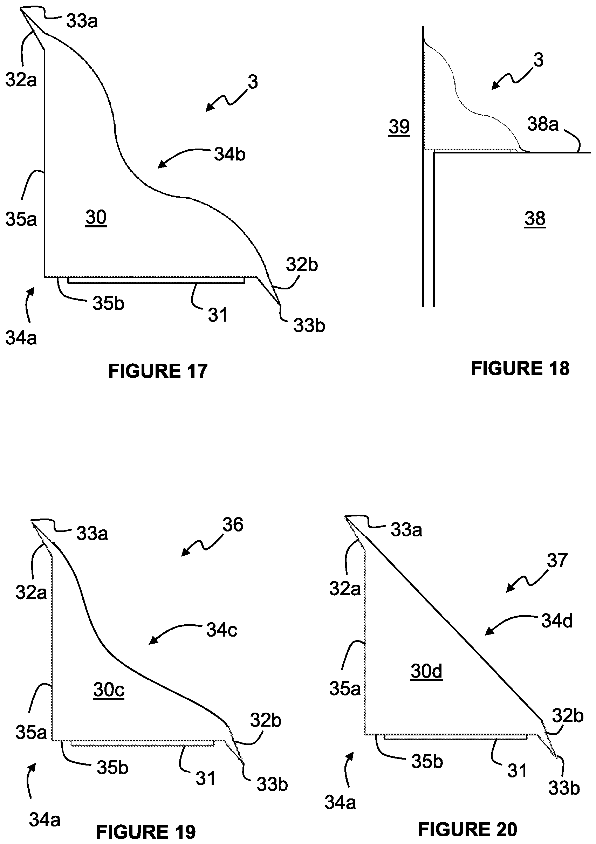

Referring now to Figure 17, there is shown an elongate seaming device 3 according to an embodiment of the invention. The device 3 according to this embodiment includes an elongate body 30, an adhesive strip 31 and a pair of wedge shaped lips 32a, 32b with sharp edges 33a. The body 30 has a first, mounting side 34a and a second, visible side 34b. The mounting side 34a includes a first mounting surface 35a and a second mounting surface 35b extending perpendicular to the first mounting surface 35a, thereby creating a substantially triangular form.

The adhesive strip 31 is on the second mounting surface 35b and is in the form of a double face tape in this embodiment. The adhesive strip 31 may advantageously include a release liner for removal prior to installation of the seaming device 3. In this embodiment, the visible side 34b forms the base of the triangle and is curved to provide a concave centre with convex portions on either side of the concave centre leading to the lips 32a, 32b. The lips 32a, 32b each extend from the lateral edges of the body 30 at an angle with respect to a respective one of the mounting surfaces 35a, 35b.

In use and as shown in Figure 18, the seaming device 3 is placed onto a surface 38a, which is the upper surface 38a of a bath tub 38 in this embodiment, such that the adhesive strip 31 adheres thereto in order to attach the device 3. Attachment of the device 3 causes the lip 32b that extends from the second mounting surface 35b to deform against the surface 38b. In this embodiment, the lip 32b is configured to provide a seal that inhibits ingress of water into the join along the surface 38a.

With the bath tub 38 located adjacent or against a wall 39, the other lip 32a of the seaming device 3 deforms against the wall 39, thereby providing a seal that also inhibits ingress of water into the join along the wall 39. It will be appreciated that small amounts of relative movement between the bath tub 38 and the wall 39, which is known to occur in many installations, will simply result in movement of the lip 32a along the wall 39. This arrangement minimises the risk of failure of the seam or seal when such movement occurs, in contrast with traditional, caulked joints.

Figure 19 shows an elongate seaming device 36 that is a non-claimed variation of the seaming device 3 of Figure 17, wherein like references depict like features that will not be described further herein. The seaming device 36 according to this design differs in that the visible side 34c is completely concave, without the convex portions of the previous design.

Figure 20 shows an elongate seaming device 37 that is a further non-claimed variation of the seaming devices 3, 36 of Figures 17 and 19, wherein like references depict like features that will not be described further herein. The seaming device 36 according to this design differs in that the visible side 34c is flat, without the concave or convex curved portions of the previous designs. It will be appreciated that, in use, the lips 32, 33 will deform and may cause the visible side 34c to assume a shallow concave shape.

## Claims

1. An elongate seaming device (3) for sealing a join between two surfaces, the device comprising a flexible, elongate bead (30), a pair of deformable longitudinal lips (32a, 32b) integral with and formed of the same elastomeric material as the bead (30) and an attachment means for attaching the seaming device (3) along a join between two adjacent surfaces (38a, 39), the bead (30) comprising a first mounting surface (35a) and a second mounting surface (35b) extending perpendicular to the first mounting surface (35a) thereby creating a substantially triangular form, the mounting surfaces (35a, 35b) being configured to extend, in use, along and parallel to a respective one of the two adjacent surfaces (38a, 39) of the join such that a further side (34b) of the triangular form is visible, wherein the visible side (34b) of the triangular form comprises a concave centre and convex portions on either side of the concave centre leading to the lips (32a, 32b), the attachment means comprising an adhesive layer or strip (31) extending along the first mounting surface (35a) and each lip (32a, 32b) comprises a flipper extending from one of the outer edges of the visible side (34b) at an angle relative to an adjacent one of the mounting surfaces (35a, 35b) and is configured to deform, as the device (3) is attached along the join, against respective a surface (38a, 39) on each side of the join along which the device (3) is attached to provide a substantially continuous seal.

2. A device (3) according to claim 1, wherein the each lip (32a, 32b) comprises a wedge shape that tapers to provide a sharp edge (33a, 33b) in contact with the respective surface (38a, 39).

3. A device (3) according to any preceding claim, wherein the second mounting surface (35a) is free of attachment means such that the seal is maintained whilst permitting relative movement between the adjacent surfaces (38a, 39) of the join.

4. A device (3) according to any preceding claim, wherein the adhesive layer or strip (31) is covered by a release liner which is removable, in use, prior to attachment to one of the surfaces (38a) of the join.

5. A device (3) according to any preceding claim, wherein the elastomeric material comprises a flexible polyvinylchloride or a silicone or natural rubber material.

6. A bath tub (38) or shower comprising an elongate seaming device (3) according to any preceding claim attached thereto.

7. An item of sanitary ware, such as a urinal or toilet, comprising an elongate seaming device (3) according to any one of claims 1 to 5 attached thereto.

8. A method of preparing a seal along a join between two adjacent surfaces (38a, 39), the method comprising attaching a seaming device (3) according to any one of claims 1 to 5 along a join between two adjacent surfaces (38a, 39) such that each deformable longitudinal lip (32a, 32b) deforms against a surface adjacent the join along which the device (3) is attached to provide a substantially continuous seal.

9. A method according to claim 8 further comprising removing a release liner from the adhesive strip (31) after attaching the adhesive strip (31) to the seam device (3) and prior to attaching the seam device (3) along the join.

10. A method according to claim 8 or claim 9 comprising attaching the seaming device (3) to a sanitary ware item, shower or bath along a join between the sanitary ware item, shower or bath and an adjacent wall.

## Patentansprüche

1. Längsnahtvorrichtung (3) zum Abdichten einer Fuge zwischen zwei Flächen, wobei die Vorrichtung eine biegsame, langgestreckte Wulst (30), ein Paar verformbare längliche Lippen (32a, 32b), die einstückig mit und aus demselben Elastomermaterial wie die Wulst (30) ausgebildet sind, und ein Befestigungsmittel zum Anbringen der Nahtvorrichtung (3) entlang einer Fuge zwischen zwei angrenzenden Flächen (38a, 39), wobei die Wulst (30) eine erste Anbringfläche (35a) und eine zweite Anbringfläche (35b) aufweist, die sich senkrecht zu der ersten Anbringfläche (35a) erstreckt, wodurch eine im Wesentlichen dreieckige Form gebildet wird, wobei die Anbringflächen (35a, 35b) so konfiguriert sind, dass sie sich im Einsatz entlang und parallel zu einer jeweiligen der beiden angrenzenden Flächen (38a, 39) der Fuge erstrecken, derart, dass eine weitere Seite (34b) der dreieckigen Form sichtbar ist, wobei die sichtbare Seite (34b) der dreieckigen Form eine konkave Mitte und konvexe Abschnitte auf jeder Seite der konkaven Mitte aufweist, die zu den Lippen (32a, 32b) führen, wobei das Befestigungsmittel eine Klebeschicht oder einen Klebestreifen (31) aufweist, die bzw. der sich entlang der ersten Anbringfläche (35a) erstreckt und jede Lippe (32a, 32b) eine Wulstfahne aufweist, die sich von einer der äußeren Kanten der sichtbaren Seite (34b) in einem Winkel relativ zu einer angrenzenden der Anbringflächen (35a, 35b) erstreckt und konfiguriert ist, um sich zu verformen, wenn die Vorrichtung (3) entlang der Fuge gegen jeweils eine Fläche (38a, 39) auf jeder Seite der Fuge angebracht wird, entlang der die Vorrichtung (3) angebracht wird, um eine im Wesentliche durchgehende Dichtung bereitzustellen.

2. Vorrichtung (3) nach Anspruch 1, wobei jede Lippe (32a, 32b) eine Keilform aufweist, die sich verjüngt, um eine scharfe Kante (33a, 33b) in Kontakt mit der jeweiligen Fläche (38a, 39) bereitzustellen.

3. Vorrichtung (3) nach einem der vorhergehenden Ansprüche, wobei die zweite Anbringfläche (35a) von Befestigungsmitteln frei ist, derart, dass die Dichtung beibehalten wird, wobei eine relative Bewegung zwischen angrenzenden Flächen (38a, 39) der Fuge gestattet wird.

4. Vorrichtung (3) nach einem der vorhergehenden Ansprüche, wobei die Klebeschicht oder der Klebestreifen (31) mit einer Trennlage bedeckt ist, die im Einsatz vor der Befestigung auf einer der Flächen (38a) der Fuge entfernbar ist

5. Vorrichtung (3) nach einem der vorhergehenden Ansprüche, wobei das Elastomermaterial ein biegsames Polyvinylchlorid- oder ein Silikon- oder Naturkautschukmaterial aufweist.

6. Badewanne (38) oder Dusche, aufweisend eine Längsnahtvorrichtung (3) nach einem der vorhergehenden, hierzu angehängten Ansprüche.

7. Sanitärwarenelement wie beispielsweise ein Urinal oder eine Toilette, aufweisend eine Längsnahtvorrichtung (3) nach einem der hierzu angehängten Ansprüche 1 bis 5.

8. Verfahren zum Herstellen einer Dichtung entlang einer Fuge zwischen zwei angrenzenden Flächen (38a, 39), wobei das Verfahren ein Anbringen einer Nahtvorrichtung (3) nach einem der Ansprüche 1 bis 5 entlang einer Fuge zwischen zwei angrenzenden Flächen (38a, 39) aufweist, derart, dass jede verformbare längliche Lippe (32a, 32b) sich gegen eine Fläche verformt, die an die Fuge angrenzt, entlang der die Vorrichtung (3) angebracht ist, um eine im Wesentliche durchgehende Dichtung bereitzustellen.

9. Verfahren nach Anspruch 8, ferner aufweisend ein Entfernen einer Trennlage von dem Klebestreifen (31), nachdem der Klebestreifen (31) an der Nahtvorrichtung (3) angebracht worden ist und vor dem Anbringen der Nahtvorrichtung (3) entlang der Fuge.

10. Verfahren nach Anspruch 8 oder Anspruch 9, aufweisend ein Anbringen der Nahtvorrichtung (3) an einem Sanitärwarenelement, einer Dusche oder Badewanne entlang einer Fuge zwischen dem Sanitärwarenelement, der Dusche oder Badewanne und einer angrenzenden Wand.

## Revendications

1. Dispositif d'assemblage allongé (3) destiné à étanchéifier une jointure entre deux surfaces, le dispositif comprenant un talon flexible, allongé (30), une paire de lèvres longitudinales déformables (32a, 32b) solidaires avec et formées du même matériau élastomère que le talon (30) et un moyen de fixation destiné à fixer le dispositif d'assemblage (3) le long d'une jointure entre deux surfaces adjacentes (38a, 39), le talon (30) comprenant une première surface de montage (35a) et une deuxième surface de montage (35b) se déployant perpendiculaire à la première surface de montage (35a) créant de la sorte une forme sensiblement triangulaire, les surfaces de montage (35a, 35b) étant configurées pour se déployer, en utilisation, le long et parallèle à l'une respective des deux surfaces adjacentes (38a, 39) de la jointure de manière à ce qu'un côté supplémentaire (34b) de la forme triangulaire soit visible, dans lequel le côté visible (34b) de la forme triangulaire comprend un centre concave et des parties convexes de part et d'autre du centre concave menant aux lèvres (32a, 32b), le moyen de fixation comprenant une couche ou bande adhésive (31) se déployant le long de la première surface de montage (35a) et chaque lèvre (32a, 32b) comprend une bandelette support se déployant depuis l'un des bords externes du côté visible (34b) en angle par rapport à l'une adjacente des surfaces de montage (35a, 35b) et est configurée pour se déformer, tandis que le dispositif (3) est fixé le long de la jointure, contre une surface respective (38a, 39) sur chaque côté de la jointure le long de laquelle le dispositif (3) est fixé pour fournir un joint sensiblement continu.

2. Dispositif (3) selon la revendication 1, dans lequel chaque lèvre (32a, 32b) comprend une forme en coin qui s'effile pour fournir un bord pointu (33a, 33b) en contact avec la surface respective (38a, 39).

3. Dispositif (3) selon l'une quelconque des revendications précédentes, dans lequel la deuxième surface de montage (35a) est
exempte de moyen de fixation, de sorte que le joint soit maintenu tout en permettant un déplacement relatif entre les surfaces adjacentes (38a, 39) de la jointure.

4. Dispositif (3) selon l'une quelconque des revendications précédentes, dans lequel la couche ou bande adhésive (31) est recouverte d'un revêtement anti-adhésif qui est retirable, en utilisation, avant la fixation à l'une des surfaces (38a) de la jointure.

5. Dispositif (3) selon l'une quelconque des revendications précédentes, dans lequel le matériau élastomère comprend un matériau de polychlorure de vinyle flexible ou de silicone ou de caoutchouc naturel.

6. Baignoire (38) ou douche comprenant un dispositif d'assemblage allongé (3) selon l'une quelconque des revendications précédentes fixé à celle-ci.

7. Installation sanitaire, comme un urinoir ou une cuvette de toilette, comprenant un dispositif d'assemblage allongé (3) selon l'une quelconque des revendications 1 à 5 fixé à celle-ci.

8. Procédé de préparation d'un joint le long d'une jointure entre deux surfaces adjacentes (38a, 39), le procédé comprenant la fixation d'un dispositif d'assemblage allongé (3) selon l'une quelconque des revendications 1 à 5 le long d'une jointure entre deux surfaces adjacentes (38a, 39) de telle sorte que chaque lèvre longitudinale déformable (32a, 32b) se déforme contre une surface adjacente à la jointure le long de laquelle le dispositif (3) est fixé pour fournir un joint sensiblement continu.

9. Procédé selon la revendication 8, comprenant en outre le retrait d'un revêtement anti-adhésif de la bande adhésive (31) après la fixation de la bande adhésive (31) au dispositif de d'assemblage (3) et avant la fixation du dispositif d'assemblage (3) le long de la jointure.

10. Procédé selon la revendication 8 ou 9, comprenant la fixation du dispositif d'assemblage (3) à une installation sanitaire, douche ou baignoire le long d'une jointure entre l'installation sanitaire, la douche ou la baignoire et une paroi adjacente.
